# EUROPEAN PATENT APPLICATION

(11) **EP 4 600 297 A1**
(43) Date of publication of application: **13.08.2025**
(21) Application number: 23874838.8
(22) Date of filing: 02.10.2023
(51) Int. Cl.: C08L 1/00, C08L 23/10, C08L 53/00, B33Y 10/00, B33Y 80/00, B29C 64/153, B29C 64/336, B29C 64/343, B33Y 40/10, B33Y 70/00

(54) **POWDER MATERIAL FOR THREE-DIMENSIONAL SHAPING, METHOD FOR MANUFACTURING THREE-DIMENSIONAL SHAPED ARTICLE, AND THREE-DIMENSIONAL SHAPED ARTICLE**

(30) Priority: 04.10.2022 JP 2022160413
(71) Applicant: Kyoto University, Kyoto-shi, Kyoto 606-8501 (JP)
(72) Inventor: OKUDAIRA Yuzo, Kyoto-shi, Kyoto 606-8501 (JP); SANO Hironari, Kyoto-shi, Kyoto 606-8501 (JP); YANO Hiroyuki, Kyoto-shi, Kyoto 606-8501 (JP)
(74) Representative: Cabinet Beau de Loménie
(86) International application number: PCT/JP2023/035981
(87) International publication number: WO 2024/075711

(57) **Abstract**

Provided is a powder material for three-dimensional shaping, the powder material including: first resin powder containing homo polypropylene and nanofiber; and second resin powder containing block polypropylene. The nanofiber is, for example, cellulose nanofiber (CNF). The block polypropylene includes, for example, a propylene-olefin copolymer (propylene is excluded from the olefin). The powder material is suitable for manufacturing a polypropylene molded body having excellent balance between impact resistance and flexural properties, by a 3D printer.

## Description

### TECHNICAL FIELD

The present invention relates to a powder material for three-dimensional shaping, a method for manufacturing a three-dimensional shaped article, and a three-dimensional shaped article.

### BACKGROUND ART

Polypropylene is a resin material having excellent moldability and also having excellent flexural properties regardless of its light weight. Focus is placed on these characteristics, and polypropylene is more frequently applied to components of vehicles, typically, interior members and exterior members such as a bumper. A polypropylene molded body for a vehicle is manufactured by injection molding in general. In injection molding, a molded body having a curved surface can be manufactured. Patent Literature 1 discloses a polypropylene-containing resin composition optimized for injection molding.

### CITATION LIST

### Patent Literature

| | |
|---|---|
| Patent Literature 1: | JP 2002-12718A |

### SUMMARY OF INVENTION

### Technical Problem

A member for a vehicle is required to have excellent balance between impact resistance and flexural properties. In recent years, focus has been placed on production of a member for a vehicle by a 3D printer in order to perform production without using a mold and produce a member having a complicated shape. However, sufficient examination has not been made for producing a polypropylene molded body having such excellent balance by a 3D printer. According to the examination made by the inventors of the present invention, in a case where a powder material formed of homo polypropylene that is standard polypropylene as a resin material is applied to a 3D printer, achievement of excellent characteristic balance is difficult. In view of the aforementioned circumstances, an object of the present invention is to provide a powder material for three-dimensional shaping, which is suitable for manufacturing a polypropylene molded body having excellent balance between impact resistance and flexural properties, by a 3D printer.

### Solution to Problem

The present invention provides a powder material for three-dimensional shaping, the powder material including: first resin powder containing homo polypropylene and nanofiber; and second resin powder containing block polypropylene.

According to another aspect, the present invention provides a method for manufacturing a three-dimensional shaped article, the method including obtaining a three-dimensional shaped article by three-dimensional molding of the powder material for three-dimensional shaping according to the present invention, by a laser sintering 3D printer.

According to another aspect, the present invention provides a three-dimensional shaped article including polypropylene, the three-dimensional shaped article including a first domain containing homo polypropylene and nanofiber, and a second domain containing block polypropylene.

### Advantageous Effects of Invention

The powder material for three-dimensional shaping according to the present invention is suitable for manufacturing a polypropylene molded body having excellent balance between impact resistance and flexural properties, by a 3D printer.

### BRIEF DESCRIPTION OF THE DRAWINGS

FIG. 1 is a schematic diagram illustrating an example of a powder material of the present invention.
FIG. 2 is a schematic diagram illustrating a process for manufacturing a three-dimensional shaped article by a laser sintering 3D printer.
FIG. 3 is a cross-sectional view schematically showing an example of a three-dimensional shaped article of the present invention.
FIG. 4 illustrates an observed magnified image of a cross-section of a three-dimensional shaped article produced in Example 3.
FIG. 5 illustrates an observed magnified image of a cross-section of a three-dimensional shaped article produced in Comparative example 1.
FIG. 6 shows a graph indicating relationship between a content of block PP in a used powder material and Charpy impact strength, for a three-dimensional shaped article produced in each of examples, comparative examples, and reference examples.

### DESCRIPTION OF EMBODIMENTS

A powder material for three-dimensional shaping according to a first aspect of the present invention includes: first resin powder containing homo polypropylene and nanofiber; and second resin powder containing block polypropylene.

According to a second aspect of the present invention, for example, in the powder material for three-dimensional shaping according to the first aspect, a blending ratio of the second resin powder to the first resin powder as represented by a mass of the second resin powder when a mass of the first resin powder is taken as 1, is 0.6 or more and 4.0 or less.

According to a third aspect of the present invention, for example, in the powder material for three-dimensional shaping according to the first aspect, a blending ratio of the second resin powder to the first resin powder as represented by a mass of the second resin powder when a mass of the first resin powder is taken as 1, is 1.4 or more and 3.0 or less.

According to a fourth aspect of the present invention, for example, in the powder material for three-dimensional shaping according to any one of the first to the third aspects, a content of the nanofiber in the first resin powder is 15 mass% or less.

According to a fifth aspect of the present invention, for example, in the powder material for three-dimensional shaping according to any one of the first to the fourth aspects, the nanofiber is cellulose nanofiber.

According to a sixth aspect of the present invention, for example, in the powder material for three-dimensional shaping according to any one of the first to the fifth aspects, the block polypropylene includes a copolymer of propylene and an olefin, and propylene is excluded from the olefin.

A method for manufacturing a three-dimensional shaped article according to a seventh aspect of the present invention includes obtaining a three-dimensional shaped article by three-dimensional molding of the powder material for three-dimensional shaping according to any one of the first to the sixth aspects, by a laser sintering 3D printer.

A three-dimensional shaped article according to an eighth aspect of the present invention includes polypropylene, the three-dimensional shaped article including a first domain containing homo polypropylene and nanofiber, and a second domain containing block polypropylene.

According to a ninth aspect of the present invention, for example, the three-dimensional shaped article according to the eighth aspect has a cross-section on which a sea-island structure having an island portion formed by the first domain and a sea portion formed by the second domain is observed.

According to a tenth aspect of the present invention, for example, in the three-dimensional shaped article according to the eighth or the ninth aspect, Charpy unnotched impact strength by edgewise impact as evaluated in accordance with standards of JIS K7111-1:2012 is 5.5 kJ/m² or more, and a flexural modulus evaluated in accordance with an A method defined in JIS K7171:2016 is 1.2 GPa or more.

According to an eleventh aspect of the present invention, for example, in the three-dimensional shaped article according to the tenth aspect, flexural strength evaluated in accordance with the A method defined in JIS K7171:2016 is 21 MPa or more.

### [Powder material for three-dimensional shaping]

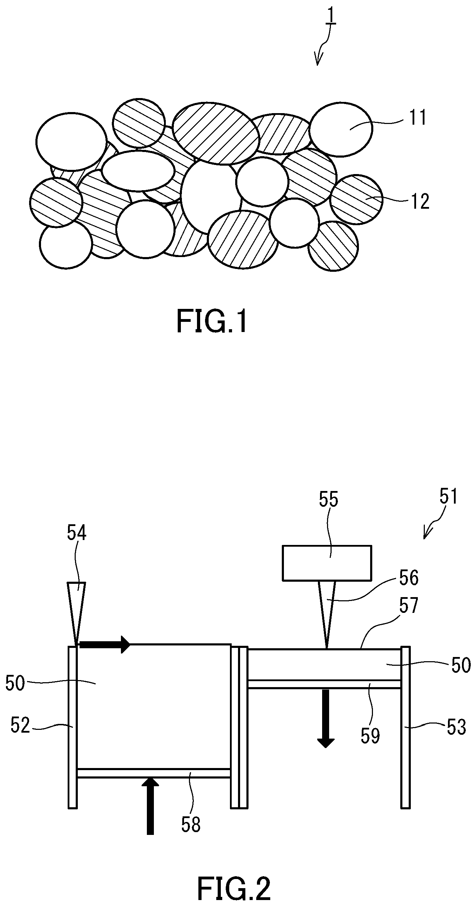

FIG. 1 illustrates an example of a powder material for three-dimensional shaping (hereinafter, referred to as "powder material") according to the present invention. A powder material 1 illustrated in FIG. 1 includes first resin powder 11 containing homo polypropylene (hereinafter, referred to as homo PP) and nanofiber, and second resin powder 12 containing block polypropylene (hereinafter, referred to as block PP). The first resin powder 11 and the second resin powder 12 are powders different from each other. A three-dimensional shaped article as a polypropylene molded body can be manufactured by applying the powder material 1 to a 3D printer. The powder material 1 is suitable for manufacturing a polypropylene molded body having excellent balance between impact resistance and flexural properties by a 3D printer. The degree of the balance becomes higher than that of at least a molded body manufactured in the same manufacturing condition by using resin powder of homo PP contained in the first resin powder 11. There are various types of 3D printers. The powder material 1 is particularly suitably applied to a laser sintering (SLS/SLM) 3D printer that sinters an accumulated layer of a powder material by laser.

A blending ratio of the second resin powder 12 to the first resin powder 11 is represented by a mass of the second resin powder 12 when a mass of the first resin powder 11 is taken as 1, and may be, for example, 0.6 or more and 4.0 or less. The lower limit of the ratio may be 0.67 or more, 0.7 or more, 0.82 or more, 1.0 or more, 1.22 or more, 1.4 or more, 1.47 or more, 1.5 or more, 1.7 or more, and 1.86 or more, and furthermore, may be 1.9 or more. The upper limit of the ratio may be 3.5 or less, 3.0 or less, 2.7 or less, 2.3 or less, and 2.2 or less, and furthermore, may be 2.1 or less. The upper limit and the lower limit of the ratio can be discretionarily combined. The powder material 1 in which the upper limit and the lower limit of the ratio are in the above-described range is particularly suitable for manufacturing a polypropylene molded body having excellent balance between impact resistance and flexural properties. The ratio may be 1.4 or more and 3.0 or less, and furthermore, may be 1.5 or more and 2.1 or less.

### (First resin powder)

Homo PP is a homopolymer of propylene. A melting point of the homo PP is, for example, 150 to 180°C, preferably 155 to 175°C, and more preferably 160 to 170°C. A recrystallization temperature after melting of the homo PP (hereinafter, referred to as recrystallization temperature) is, for example, 110 to 140°C, preferably 115 to 135°C, and more preferably 120 to 130°C. A difference between the melting point and the recrystallization temperature is preferably 30°C or more, more preferably 35°C or more, even more preferably 38°C or more, and particularly preferably 40°C or more. The upper limit of the difference is, for example, 60°C or less. Resin powder in which the difference between the melting point and the recrystallization temperature is in the above-described range is particularly suitably applied to a laser sintering 3D printer. The melting point and the recrystallization temperature can be evaluated by a differential scanning calorimeter (DSC) by setting a temperature increase rate and temperature decrease rate as 5°C/minute. The method for evaluating characteristics including the melting point and the recrystallization temperature is the same between the homo PP and the block PP.

Homo PP is crystalline in general. Crystallinity of the homo PP is, for example, 40 to 70% and preferably 50% or more. Crystallinity can be calculated from an amount of heat (heat of fusion) at the time of melting as evaluated by DSC and theoretical heat of fusion of PP crystals.

A weight-average molecular weight (Mw) of the homo PP is, for example, tens of thousands to several million, and may be 500000 to 3000000, and furthermore, may be 500000 to 2000000. The Mw can be evaluated by gel permeation chromatography (GPC).

A value of a melt flow rate (MFR) of the homo PP is, for example, 5 to 60 g/10 min., and may be 20 to 60 g/10 min. and 30 to 50 g/10 min., and furthermore, may be 35 to 45 g/10 min. The value of the MFR can be measured in accordance with the method defined in Japanese Industrial Standards (hereinafter, referred to as JIS) K7210-1. In this case, the measurement temperature is 190°C and a load is 2.16 kg.

The first resin powder 11 may contain one kind of homo PP, or two or more kinds of homo PP.

The nanofiber can function as a reinforcing material for enhancing flexural properties of a polypropylene molded body. The nanofiber in the first resin powder 11 is typically dispersed in the homo PP.

The nanofiber is a fibrous substance having an average fiber diameter of 10 µm or less in general. The upper limit of the average fiber diameter may be 5 µm or less, 3 µm or less, 1 µm or less, less than 1 µm, 500 nm or less, 250 nm or less, 100 nm or less, 80 nm or less, and 60 nm or less, and furthermore, may be 40 nm or less. The lower limit of the average fiber diameter is, for example, 1 nm or more, and may be 5 nm or more, and furthermore, may be 10 nm or more. The average fiber length of the nanofiber is, for example, 5 to 1000 µm, and may be 5 to 500 µm and 5 to 250 µm, and furthermore, may be 5 to 100 µm.

Examples of the nanofiber include cellulose nanofiber (hereinafter, referred to as CNF), cellulose nanocrystals, chitin nanofiber, chitosan nanofiber, and carbon nanotube. However, the nanofiber is not limited to the above-described examples. The nanofiber is preferably CNF. CNF is suitably fused to homo PP. CNF can also function as a material for inhibiting aggregation of resin powder.

The average fiber diameter of the CNF is preferably 1 nm to 10 µm, more preferably 1 nm to 1 µm, and even more preferably 1 nm to 500 nm. The lower limit of the average fiber diameter is preferably 3 nm or more. The fiber diameter of the CNF may not necessarily be uniform in the length direction of each fiber. For example, cellulose-based fiber having a portion (trunk portion; for example, diameter of 5 µm) which has a large fiber diameter, and one or more portions (branch portion; for example, diameter of about 10 nm) which have small fiber diameters and exist on the surface of the trunk portion is also included in the CNF described herein. The average fiber length of the CNF is preferably 5 µm or more and more preferably 5 µm to 100 µm. The CNF may contain lignin, and hydroxy groups thereof may be chemically modified.

The CNF may be either unmodified CNF or modified CNF. Examples of the modified CNF include CNF in which the surface is hydrophobized by modifying hydroxy groups of the cellulose with hydrophobic groups, etc. The hydrophobized CNF is suitably dispersed into polypropylene. Examples of the modification include chemical modification such as modification with acetyl groups and modification by alkenyl succinic anhydride (ASA). Modification by ASA is also applicable to a CNF continuous production process in which wood pulp is used as a raw material.

The chemical modification of the CNF in the description herein means that a part of hydroxy groups (hereinafter, hydroxy groups of a sugar chain and lignin of a cellulose-based nanomaterial (A) are collectively referred to as hydroxy group of the material (A)) of a sugar chain and/or lignin of the cellulose-based nanomaterial (A) contained in the CNF is modified with other groups. For example, CNF chemically modified by at least one selected from the group consisting of the following (i) to (iii) is particularly suitably dispersed into polypropylene.
(i) A part of hydroxy groups of the material (A) is esterified with carboxylic acid represented by the following formula (1). The hydroxy groups are converted to -O-COR through the esterification. The hydroxy groups may be esterified with two or more kinds of carboxylic acid.

   R-COOH ··· (1)

   In the formula, R represents (a) an alkyl or alkenyl group, (b) an alicyclic hydrocarbon group which may be crosslinked or condensed, (c) an oxyalkyl group substituted with an alicyclic hydrocarbon group which may be crosslinked or condensed, or (d) a phenoxyalkyl group, a phenoxyalkyl group substituted with an alkyl group, or a phenoxyalkyl group substituted with an alicyclic hydrocarbon group which may be crosslinked or condensed.
(ii) A part of hydroxy groups of the material (A) is half-esterified with alkyl succinic anhydride or ASA. The half-esterification means that merely one carbonyl group in alkyl succinic anhydride or ASA forms an ester bond with a hydroxy group of the material (A). Each of the alkyl and the alkenyl may be linear or branched. The hydroxy groups may be half-esterified with two or more kinds of alkyl succinic anhydride or ASA.
(iii) Hydrogen atoms of a part of hydroxy groups of the material (A) are substituted with carboxymethyl groups, carboxyethyl groups, hydroxyethyl groups, 2-hydroxypropyl groups, or cyanoethyl group to form ether bonds. For example, in a case where the hydrogen atom is substituted with a carboxymethyl group, the hydroxy group is converted to -O-CH₂-COOH.

In Formula (1), in a case where R of the carboxylic acid represents (a) an alkyl group or an alkenyl group, each of the alkyl group and the alkenyl group may be linear or branched. The number of carbon atoms of each of the alkyl group and the alkenyl group is, for example, 1 to 17, and may be 1 to 12, 1 to 10, 1 to 6, 1 to 4, 1 to 3, and 1 to 2, and furthermore, may be 1. R preferably represents an alkyl or alkenyl group having 1 to 17 carbon atoms, and more preferably represents an alkyl group having 1 to 17 carbon atoms. R preferably represents a methyl group, an ethyl group, an i-butyl group, a t-butyl group, an n-undecyl group, an n-tridecyl group, an n-pentadecyl group, or an n-heptadecyl group, and more preferably represents a t-butyl group. The carboxylic acid in which R is (a) is preferably acetic acid, propionic acid, 2-methylbutanoic acid, pivalic acid, lauric acid, myristic acid, palmitic acid, or stearic acid, and is more preferably pivalic acid.

In Formula (1), in a case where R of the carboxylic acid represents (b) an alicyclic hydrocarbon group which may be crosslinked or condensed, R preferably represents an adamantyl group, a cyclohexyl group, or a 4-(t-butyl)cyclohexyl group, and more preferably represents an adamantyl group.

In Formula (1), in a case where R of the carboxylic acid represents (c) an oxyalkyl group substituted with an alicyclic hydrocarbon group which may be crosslinked or condensed, R preferably represents a bornyloxymethyl group, an isobornyloxymethyl group, or a menthyl group.

In Formula (1), in a case where R of the carboxylic acid represents (d) a phenoxyalkyl group, a phenoxyalkyl group substituted with an alkyl group, or a phenoxyalkyl group substituted with an alicyclic hydrocarbon group which may be crosslinked or condensed, the alkyl group may be linear or branched. The number of carbon atoms of the alkyl group is, for example, 1 to 17, and may be 1 to 12, 1 to 10, 1 to 6, 1 to 4, 1 to 3, and 1 to 2, and furthermore, may be 1. R preferably represents a phenoxymethyl group, a 4-(t-butyl)phenoxymethyl group, a 4-(1,1,3,3-tetramethyl)butylphenoxymethyl group, an adamantylphenoxymethyl group, a bornylphenoxymethyl group, a bornylphenoxypentyl group, or a menthylphenoxymethyl group, and more preferably represents a 4-(t-butyl)phenoxymethyl group, a 4-(1,1,3,3-tetramethyl)butylphenoxymethyl group, an adamantylphenoxymethyl group, a bornylphenoxymethyl group, or a menthylphenoxymethyl group.

ASA may be a compound formed by a skeleton derived from an olefin having 4 to 18 carbon atoms which may be branched and a succinic anhydride skeleton. Examples of the ASA include pentenyl succinic anhydride, hexenyl succinic anhydride, octenyl succinic anhydride, decenyl succinic anhydride, undecenyl succinic anhydride, dodecenyl succinic anhydride, tridecenyl succinic anhydride, tetradecenyl succinic anhydride, hexadecenyl succinic anhydride, octadecenyl succinic anhydride, and i-octadecenyl succinic anhydride. Examples of commercially available ASA include AS1533 (manufactured by SEIKO PMC CORPORATION), TNS135 (manufactured by SEIKO PMC CORPORATION), RIKACID DDSA (manufactured by New Japan Chemical Co., Ltd.; tetrapropenyl succinic anhydride (3-dodecenyl succinic anhydride)), DSA (manufactured by Sanyo Chemical Industries, Ltd.), and PDSA-DA (manufactured by Sanyo Chemical Industries, Ltd.).

The alkyl succinic anhydride may have a structure in which unsaturated bonds of alkenyl groups of various kinds of ASA described above are reduced by hydrogenation. In other words, the alkyl succinic anhydride may be succinic anhydride obtained by converting alkenyl groups of ASA to alkyl groups. Examples of the alkyl succinic anhydride include octyl succinic anhydride, dodecyl succinic anhydride, tridecenyl succinic anhydride, tetrahexadecyl succinic anhydride, hexadecyl succinic anhydride, and octadecyl succinic anhydride.

A content of the nanofiber in the first resin powder 11 is, for example, 15 mass% or less. The lower limit of the content may be 0.5 mass% or more, 1 mass% or more, 2 mass% or more, 3 mass% or more, 4 mass% or more, 5 mass% or more, 6 mass% or more, 7 mass% or more, and 8 mass% or more, and furthermore, may be 9 mass% or more. The upper limit of the content may be 14 mass% or less, 13 mass% or less, and 12 mass% or less, and furthermore, may be 11 mass% or less.

The first resin powder 11 may contain a material other than the homo PP and the nanofiber. Examples of the other material include an additive. Examples of the additive include a filler, a compatibilizer, a colorant, an antistatic agent, a thermal stabilizer, a flame retardant, and an antioxidant. The other material may be either an organic material or an inorganic material. The other material is not limited to the above-described examples. In a case where the other material is contained, a content of the other material in the first resin powder 11 is, for example, 10 mass% or less, and may be 7 mass% or less, 5 mass% or less, and 3 mass% or less, and furthermore, may be 1 mass% or less. The lower limit of the content is, for example, 0.1 mass% or more, and may be 0.3 mass% or more.

Examples of the filler include talc, carbon, glass, a metal, a metal oxide, and silica. Examples of the metal oxide include alumina and titania. The shape of the filler is, for example, a fiber-like, bead-like, or flake-like shape. Carbon may be carbon fiber. Glass may be glass fiber or glass beads. However, the filler is not limited to the above-described examples.

Examples of the compatibilizer include a material for enhancing dispersibility of the nanofiber into polypropylene. In a case where the nanofiber is CNF, the material is, for example, maleic anhydride-modified polypropylene (MAPP).

The average particle diameter of the first resin powder 11 is, for example, 20 to 80 µm. The lower limit of the average particle diameter may be 25 µm or more, 30 µm or more, 35 µm or more, 40 µm or more, and 45 µm or more, and furthermore, may be 50 µm or more. The upper limit of the average particle diameter may be 75 µm or less and 70 µm or less, and furthermore, may be 65 µm or less. The average particle diameters of the resin powder and the powder material can be obtained as d50 from a particle size distribution on a volume basis as measured according to a laser diffraction·scattering method.

The first resin powder 11 can be, for example, formed by mixing the homo PP powder and the nanofiber. The first resin powder 11 may be formed by forming a resin molded body (for example, sheet, strand, flake-shaped body, etc.) containing the homo PP and the nanofiber, and pulverizing the resin molded body. The resin molded body can be, for example, formed by melt-kneading and molding with use of a twin-screw extruder or the like. The pulverization is, for example, freeze-pulverization. However, the method for forming the first resin powder 11 is not limited to the above-described examples.

### (Second resin powder)

Block PP is typically a mixture of homo PP or random PP, a copolymer (hereinafter, referred to as copolymer a) of propylene and another monomer, and a homopolymer of the other monomer. The copolymer a is a rubber-like substance which is not crystalline, in general. For example, the block PP typically has a continuous phase which mainly contains homo PP or random PP (preferably homo PP), and a non-continuous phase which contains the copolymer a and a homopolymer of the other monomer. In the non-continuous phase, the copolymer a may cover the homopolymer of the other monomer. A mass ratio between the continuous phase and the non-continuous phase is, for example, 60 to 90:40 to 10. The block PP is manufactured by adding the other monomer to a system in which polymerization of the homo PP has been performed or a system in which the polymerization is being performed, and further progressing polymerization in general. The other monomer is typically an olefin. However, propylene is excluded from the olefin. Examples of the olefin include ethylene, butene, and hexene, and the olefin may be ethylene. In other words, the copolymer a may be a propylene/ethylene copolymer (typically, ethylene propylene rubber) and the block PP may contain a propylene/ethylene copolymer.

A melting point of the block PP is, for example, 150 to 180°C, and is preferably 155 to 175°C and more preferably 160 to 170°C. A recrystallization temperature of the block PP is, for example, 110 to 140°C, and is preferably 115 to 135°C and more preferably 120 to 130°C. A difference between the melting point and the recrystallization temperature is preferably 30°C or more, more preferably 35°C or more, even more preferably 38°C or more, and particularly preferably 40°C or more. The upper limit of the difference is, for example, 60°C or less. A difference in melting point between the block PP and the homo PP contained in the first resin powder 11 and a difference in the recrystallization temperature therebetween are each preferably 15°C or less, more preferably 10°C or less, and even more preferably 5°C or less.

The block PP is crystalline in general. The crystallinity of the block PP is, for example, 40 to 70% and preferably 50% or more, for a homo PP portion included in the block PP.

The weight-average molecular weight (Mw) of the block PP is, for example, tens of thousands to several million, and may be 500000 to 3000000, and furthermore, may be 500000 to 2000000, for a homo PP portion included in the block PP.

The value of the MFR of the block PP is, for example, 20 to 60 g/10 min. and may be 30 to 50 g/10 min., and furthermore, may be 35 to 45 g/10 min.

The second resin powder 12 may contain one kind of block PP, or two or more kinds of block PP.

The second resin powder 12 preferably contains no nanofiber. In a case where nanofiber is contained, a content of the nanofiber in the second resin powder 12 may be 5 mass% or less, 4 mass% or less, 3 mass% or less, 2 mass% or less, and 1 mass% or less, and furthermore, may be 0.5 mass% or less.

The second resin powder 12 may contain a material other than the block PP. Examples of the other material are the same as the examples of the materials described for the first resin powder 11. In a case where the other material is contained, a content of the other material in the second resin powder 12 is, for example, 10 mass% or less, and may be 7 mass% or less, 5 mass% or less, and 3 mass% or less, and furthermore, may be 1 mass% or less. The lower limit of the content is, for example, 0.1 mass% or more, and may be 0.3 mass% or more.

The average particle diameter of the second resin powder 12 is, for example, 30 to 100 µm. The lower limit of the average particle diameter may be 35 µm or more, 40 µm or more, 45 µm or more, 50 µm or more, and 55 µm or more, and furthermore, may be 60 µm or more. The upper limit of the average particle diameter may be 90 µm or less, 80 µm or less, and 75 µm or less, and furthermore, may be 70 µm or less.

The second resin powder 12 can be, for example, formed by forming a resin molded body (for example, sheet, strand, flake-shaped body, etc.) containing the block PP, and pulverizing the resin molded body. The methods for forming and pulverizing the resin molded body are as described above for the first resin powder 11. However, the method for forming the second resin powder 12 is not limited to the above-described examples.

### (Powder material)

A content of the homo PP in the powder material 1 is, for example, 10 to 60 mass%. The lower limit of the content may be 15 mass% or more, 17 mass% or more, 20 mass% or more, 22 mass% or more, and 24 mass% or more, and furthermore, may be 25 mass% or more. The upper limit of the content may be 55 mass% or less, 50 mass% or less, 45 mass% or less, 40 mass% or less, 35 mass% or less, and 33 mass% or less, and furthermore, may be 30 mass% or less.

A content of the block PP in the powder material 1 is, for example, 35 to 85 mass%. The lower limit of the content may be 40 mass% or more, 42 mass% or more, 45 mass% or more, 47 mass% or more, 50 mass% or more, 52 mass% or more, 55 mass% or more, 57 mass% or more, 60 mass% or more, and 62 mass% or more, and furthermore, may be 65 mass% or more. The upper limit of the content may be 80 mass% or less, 77 mass% or less, 75 mass% or less, and 72 mass% or less, and furthermore, may be 70 mass% or less.

In the powder material 1, the blending ratio of the second resin powder 12 to the first resin powder 11 can be, for example, evaluated according to the following (1) to (4).
(1) The powder material 1 to be evaluated is dispersed in uncured epoxy resin, and the epoxy resin is thereafter cured. Whether or not the first resin powder 11 containing the homo PP and the nanofiber and the second resin powder 12 containing the block PP are contained in the powder material 1 to be evaluated is confirmed before the dispersion as necessary. For the confirmation, a known technique can be used.
(2) The cross-section of the cured product is observed by a magnified observation technique such as an optical microscope and an electron microscope. An optical microscope may be a fluorescence microscope that can capture fluorescence that can be emitted from nanofiber such as CNF. A region to be observed is, for example, a region A described below.
(3) An area ratio between a domain mainly including the homo PP and a domain mainly including the block PP is evaluated in an observed magnified image. For the evaluation, a visual difference (contrast difference, etc.,) between the homo PP and the block PP in the observed magnified image can be used. An area of the nanofiber is set to be also included in the area of the domain including the nanofiber such as CNF.
(4) A volume ratio is obtained from the area ratio, and the volume ratio is converted to a mass ratio. For the conversion to the mass ratio, specific gravities of the homo PP and the block PP can be used. In a case where the specific gravities are almost the same, the volume ratio may be used as the mass ratio.

A content of the nanofiber in the powder material 1 is, for example, 1 to 8 mass%. The lower limit of the content may be 1.5 mass% or more, 2 mass% or more, and 2.5 mass% or more, and furthermore, may be 3 mass% or more. The upper limit of the content may be 7 mass% or less, 6 mass% or less, 5 mass% or less, and 4.5 mass% or less, and furthermore, may be 4.0 mass% or less.

An average particle diameter of the powder material 1 is, for example, 30 to 80 µm. The lower limit of the average particle diameter may be 35 µm or more, 40 µm or more, and 45 µm or more, and furthermore, may be 50 µm or more. The upper limit of the average particle diameter may be 75 µm or less and 70 µm or less, and furthermore, may be 65 µm or less.

The powder material 1 may contain fine powder of the first resin powder 11 and/or fine powder of the second resin powder 12, and may particularly contain fine powder of the first resin powder 11. A degree to which the fine powder is contained can be evaluated by a particle size distribution measurement according to a laser diffraction·scattering method for the powder material 1. In the powder material 1, in the particle size distribution on a volume basis as measured according to a laser diffraction·scattering method, the cumulative frequency A for particle diameters of less than 38 µm and/or the cumulative frequency B for particle diameters of less than 30 µm may be 8% or more, and may be 10% or more, 11% or more, 12% or more, 14% or more, 15% or more, and 17% or more, and furthermore, may be 19% or more. The cumulative frequency B may be 10% or more, 11 % or more, 12% or more, and 13% or more, and furthermore, may be 14% or more. In the particle size distribution on a volume basis as measured according to a laser diffraction·scattering method, the cumulative frequency C for particle diameters of less than 20 µm may be 5% or more and 6% or more, and furthermore, may be 7% or more. The fine powder is likely to be aggregated, and production of a molded body may be hindered due to aggregation of the fine powder in a laser sintering 3D printer. However, nanofiber, in particular, CNF acts to inhibit aggregation of powder, and thus, the powder material 1 containing nanofiber is suitably applied to a 3D printer in a state where the fine powder is contained. In a case where focus is on the aggregation inhibiting effect, the content of the nanofiber in the powder material 1 is preferably 2 mass% or more.

Since a lot of fine powder can be contained, for example, the following effects are expected.
(1) A step of previously removing fine powder for manufacturing a three-dimensional shaped article is not required, and production cost for the powder material and the molded body can be reduced. Since fine powder has a high adhesion force, time and cost required for the removal are great.
(2) The smoothness of the surface of a three-dimensional shaped article can be enhanced.
(3) Fine powder has low heat capacity, and thus, a sweeping speed of laser can be enhanced. Thus, time and production cost required for manufacturing a three-dimensional shaped article can be reduced.
(4) Molding can be performed such that fine powder enters voids between powder having greater particle diameters, and thus, a proportion of voids included in the molded body can be reduced, and mechanical characteristics of the molded body can be further enhanced.

Coarse powder may be removed from the powder material 1. For example, in a particle size distribution on a volume basis as measured according to a laser diffraction·scattering method, the cumulative frequency D for particle diameters of 115 µm or less may be 85% or more and 85.5% or more, and furthermore, may be 86% or more. Coarse powder can be removed by a classification process in which a sieve, mesh, etc., is used. For the classification process, a test sieve defined in JIS Z8801:2006 can be used.

The powder material 1 may contain a material other than the first resin powder 11 and the second resin powder 12. Examples of the other material are the same as the examples of the other material that can be contained in the first resin powder 11. In a case where the other material is contained, a content of the other material in the powder material 1 is, for example, 10 mass% or less, and may be 7 mass% or less, 6 mass% or less, 5 mass% or less, and 4 mass% or less, and furthermore, may be 3 mass% or less. The lower limit of the content is, for example, 0.3 mass% or more, and may be 0.5 mass% or more, and furthermore, may be 1.0 mass% or more.

The powder material 1 may be used for an application other than manufacturing of a three-dimensional shaped article by a laser sintering 3D printer.

The powder material 1 can be, for example, formed by mixing the first resin powder 11 and the second resin powder 12.

### [Method for manufacturing three-dimensional shaped article]

A manufacturing method of the present invention includes obtaining a three-dimensional shaped article as a polypropylene molded body by three-dimensional molding of the powder material of the present invention by a laser sintering 3D printer.

The three-dimensional shaped article is typically manufactured by a laser sintering 3D printer as follows (see FIG. 2). A printer 51 includes a preheating tank 52, a molding tank 53, a scraper 54, and a laser applying device 55. Bottom plates 58, 59 of the preheating tank 52 and the molding tank 53 are movable upward and downward. A powder material 50 is stored in the preheating tank 52. The powder material 50 is preheated to a temperature that is slightly lower than a melting point of a resin contained in the powder material 50 in general. By the pre-heating, melting of the powder material by laser application can be accelerated. Therefore, for example, a sweeping speed of laser can be enhanced, so that shaping time can be shortened. The preheated powder material 50 is caused to flow into the molding tank 53 by sliding of the scraper 54, and forms a layer having a predetermined thickness in the molding tank 53. The predetermined thickness depends on the size of the printer 51, or the like, but is typically adjusted to be about 100 to 300 µm. Subsequently, laser 56 is applied from the laser applying device 55 to the layer of the powder material 50 in the molding tank 53, and the powder material is melted to form a bond layer (thermal bond layer) of the powder material 50 which has a predetermined pattern. Flowing of the powder material 50 from the preheating tank 52 into the molding tank 53 and formation of the bond layer by application of the laser 56 are repeated, to form a three-dimensional shaped article. After the bond layer has been formed, before the temperature of the layer is reduced to be less than the recrystallization temperature, a succeeding bond layer is formed, and thus, the bond layers can be more assuredly joined to each other. According to the progress of shaping, the bottom plate 58 of the preheating tank 52 is moved upward, and the bottom plate 59 of the molding tank 53 is moved downward. The printer 51 is an example of a laser sintering 3D printer. A structure and a specific operation method of the printer are not limited to the above-described examples as long as thermal bonding for the powder material by laser application is used. The manufacturing method of the present invention may include any step as long as a three-dimensional shaped article is obtained.

### [Three-dimensional shaped article]

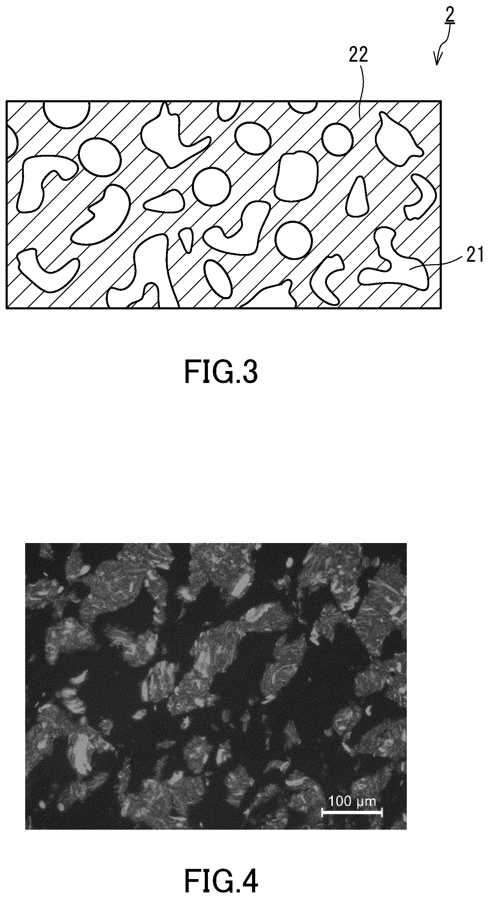

FIG. 3 illustrates an example of the three-dimensional shaped article of the present invention. FIG. 3 illustrates a cross-section of a three-dimensional shaped article 2. The three-dimensional shaped article 2 illustrated in FIG. 3 contains polypropylene. The three-dimensional shaped article 2 includes a first domain 21 containing homo PP and nanofiber, and a second domain 22 containing block PP. The first domain 21 and the second domain 22 as illustrated in FIG. 3 are fused to each other. The three-dimensional shaped article 2 can be manufactured by shaping the powder material 1 of the present invention by a laser sintering 3D printer. In this case, the three-dimensional shaped article 2 is a joined body of (the first resin powder 11 and the second resin powder 12 included in) the powder material 1. The first domain 21 is derived from the first resin powder 11 and the second domain 22 is derived from the second resin powder 12.

In observation of the cross-section of the three-dimensional shaped article 2, a proportion of an area of the first domain 21 on the cross-section may be 65% or less, 60% or less, 55% or less, 50% or less, 45% or less, 40% or less, 38% or less, and 35% or less, and furthermore, may be 33% or less. The lower limit of the proportion is, for example, 22% or more, and may be 25% or more and 27% or more, and furthermore, may be 30% or more. In observation of the cross-section of the three-dimensional shaped article 2, a proportion of an area of the second domain 22 on the cross-section may be 35% or more, 40% or more, 45% or more, 50% or more, 55% or more, 60% or more, 62% or more, and 65% or more, and furthermore, may be 67% or more. The upper limit of the proportion may be, for example, 78% or less, 75% or less, and 73% or less, and furthermore, may be 70% or less. On the cross-section, the area of the second domain 22 may be greater than the area of the first domain 21. The cross-section can be observed in a rectangular region A in which the long side of the region A is about 500 to 1500 µm and the short side of the region A is about 400 to 1200 µm on the cross-section. The region A may have a rectangular shape in which the long side is 630 µm and the short side is 460 µm. The cross-section can be observed by using a magnified observation technique such as an optical microscope and an electron microscope. The magnified observation technique may be a fluorescence microscope or a phase-contrast microscope. Since CNF emits fluorescence with respect to excitation light in a wavelength range of 400 to 500 nm in general, this may be used to observe and distinguish the first domain 21 containing CNF and the second domain 22 containing no CNF from each other by a fluorescence microscope.

The three-dimensional shaped article 2 shown in FIG. 3 has a sea-island structure having an island portion formed by the first domain 21 and a sea portion formed by the second domain 22. In other words, the three-dimensional shaped article of the present invention may have a cross-section on which a sea-island structure having an island portion formed by the first domain 21 and a sea portion formed by the second domain 22 is observed. The island portion is a phase (non-continuous phase, dispersion phase) that is confirmed to be dispersed into the sea portion as a continuous phase on the cross-section on which the sea-island structure is observed. However, the cross-section on which the sea-island structure is observed may include a portion in which the second domain 22 is dispersed in the first domain 21. In other words, the cross-section may include a portion in which the second domain 22 is surrounded by the first domain 21 which forms a continuous ring-like shape. On the cross-section including a first phase and a second phase, in a case where the sum of the peripheral lengths of the first phase which is continuously surrounded by the second phase is greater than the sum of the peripheral lengths of the second phase which is continuously surrounded by the first phase, the second phase can be regarded as the continuous phase, and the first phase can be regarded as the non-continuous phase. The three-dimensional shaped article 2 which has a cross-section having the sea-island structure is particularly suitable for enhancing balance between impact resistance and flexural properties. A blending ratio of the second resin powder 12 to the first resin powder 11 as represented by a mass of the second resin powder 12 when a mass of the first resin powder 11 is taken as 1, may be 1.4 or more and 3.0 or less and preferably 1.5 or more and 2.1 or less. According to the examination made by the inventors of the present invention, the above range of the blending ratio is particularly suitable for manufacturing the three-dimensional shaped article 2 which has a cross-section having the sea-island structure.

The size of the cross-section on which presence or absence of the sea-island structure is observed is represented by an area, and may be 1.0×10⁴ µm² or more, 2.5×10⁴ µm² or more, 5.0×10⁴ µm² or more, 7.5×10⁴ µm² or more, 1.0×10⁵ µm² or more, 2.5×10⁵ µm² or more, 2.89×10⁵ µm² or more, 5.0×10⁵ µm² or more, 1 mm² or more, and 2.5 mm² or more, and furthermore, may be 5 mm² or more. The upper limit of the size of the cross-section to be observed is represented by an area, and may be, for example, 100 mm² or less, 50 mm² or less, and 25 mm² or less, and furthermore, may be 10 mm² or less. The observed cross-section may have a rectangular or square shape. The observed cross-section may be the above-described region A. A technique for observing the cross-section of the three-dimensional shaped article is as described above.

In the three-dimensional shaped article of the present invention, the cross-section having the sea-island structure may exist in any direction. In other words, the three-dimensional shaped article of the present invention can have a stereoscopically extending sea-island structure.

The average domain diameter of the first domain 21 as the island portion in the sea-island structure may be, for example, 20 to 120 µm, 30 to 100 µm, and 40 to 90 µm, and furthermore, may be 50 to 80 µm. The average domain diameter can be obtained as d50 from an area distribution of the first domain 21 included in an observed image of the cross-section of the three-dimensional shaped article 2, e.g., an observed image of the region A. The area distribution can be obtained by image processing of the observed image, and software such as ImageJ can be used for the image processing.

The Charpy impact strength of the three-dimensional shaped article 2 is, for example, 5.5 kJ/m² or more, and may be 5.7 kJ/m² or more, 6 kJ/m² or more, 6.5 kJ/m² or more, 7 kJ/m² or more, 7.5 kJ/m² or more, 8 kJ/m² or more, 8.5 kJ/m² or more, 9 kJ/m² or more, 9.4 kJ/m² or more, 10 kJ/m² or more, 10.5 kJ/m² or more, 10.9 kJ/m² or more, and 11 kJ/m² or more, and furthermore, may be 11.5 kJ/m² or more. The upper limit of the Charpy impact strength is, for example, 25 kJ/m² or less. The Charpy impact strength is a value obtained as Charpy unnotched impact strength by edgewise impact in accordance with the standards of JIS K7111-1:2012.

The flexural modulus of the three-dimensional shaped article 2 is, for example, 1.2 GPa or more, and may be 1.24 GPa or more, 1.3 GPa or more, 1.35 GPa or more, 1.4 GPa or more, 1.45 GPa or more, 1.5 GPa or more, 1.55 GPa or more, 1.6 GPa or more, and 1.65 GPa or more, and furthermore, may be 1.7 GPa or more. The upper limit of the flexural modulus is, for example, 3 GPa or less, and may be 2.5 GPa or less, and furthermore, may be 2 GPa or less. The flexural modulus is a value obtained in accordance with the A method (a method for obtaining a flexural stress/flexural strain curve at one test speed) defined in JIS K7171:2016.

The flexural strength of the three-dimensional shaped article 2 is, for example, 18 MPa or more, and may be 20 MPa or more, 21 MPa or more, 22 MPa or more, 23 MPa or more, 24 MPa or more, 25 MPa or more, 26 MPa or more, 27 MPa or more, and 28 MPa or more, and furthermore, may be 29 MPa or more. The upper limit of the flexural strength is, for example, 35 MPa or less, and may be 33 MPa or less and 31 MPa or less, and furthermore, may be 30 MPa or less. The flexural strength is a value obtained in accordance with the A method (a method for obtaining a flexural stress/flexural strain curve at one test speed) defined in JIS K7171:2016.

In the three-dimensional shaped article 2, the Charpy impact strength may be 5.5 kJ/m² or more, and the flexural modulus may be 1.2 GPa or more.

In the three-dimensional shaped article 2, the Charpy impact strength may be 5.5 kJ/m² or more, the flexural modulus may be 1.2 GPa or more, and the flexural strength may be 21 MPa or more. The Charpy impact strength may be 8.0 kJ/m² or more, the flexural modulus may be 1.7 GPa or more, and the flexural strength may be 28 MPa or more.

In the three-dimensional shaped article 2, the Charpy impact strength may be 5.5 kJ/m² or more, and, at the same time, a product of the Charpy impact strength and the flexural modulus may be 12.5 GPa·kJ/m² or more, and may be 13.0 GPa·kJ/m² or more, 15.0 GPa·kJ/m² or more, 17.0 GPa·kJ/m² or more, and 19.0 GPa·kJ/m² or more, and furthermore, may be 20.0 GPa·kJ/m² or more.

The specific gravity of the three-dimensional shaped article 2 is, for example, 0.7 to 0.9 g/cm³, may be 0.75 to 0.85 g/cm³, and furthermore, may be 0.75 to 0.8 g/cm³.

Examples of the three-dimensional shaped article 2 include vehicle interior components and exterior components such as a bumper, a door trim, and a wheel cover, medical instruments such as a prosthetic leg, a prosthetic hand, and a therapeutic instrument, electronic components, parts of lighting appliances, sporting goods, and molds (including prototype molds). Examples of the vehicle include trains in addition to automobiles. Examples of the automobile include electric automobiles. However, the three-dimensional shaped article 2 is not limited to the above-described examples. Examples

The present invention will be described below in more detail by way of examples. The present invention is not limited to specific aspects described below.

### (Production example 1-1: Production of first resin powder A1)

Pellets of homo PP (manufactured by Japan Polypropylene Corporation, NOVATEC PP, MA04A, melting point of 166°C, recrystallization temperature of 124°C, MFR of 40 g/10 min.), CNF produced based on the production method disclosed in JP5638001B, and maleic anhydride-modified PP (MAPP; H1000P manufactured by TOYOBO Co., Ltd.) as a compatibilizer were melt-kneaded by a melt-extruder. The condition for the melt-kneading was the same among all of the production examples. The CNF had a fiber diameter ranging from a dozen or so nm to dozens of µm, an average fiber length ranging from dozens of nm to hundreds of µm, and an average fiber diameter of less than 1000 nm. A part of the CNF had a surface having been hydrophobized by acetyl groups (acetylation modification) (modified part). Subsequently, the kneaded product was discharged from the extruder, and a flake-shaped resin molded body was obtained. Subsequently, the obtained resin molded body was freeze-pulverized, a classification process for removing coarse powder was then performed, and first resin powder A1 containing the homo PP and the CNF was obtained. For the classification process, a test sieve having a nominal size of opening of 106 µm as defined in JIS Z8801-1 was used. The classification process was performed twice. The method for the classification process was the same among all of the production examples. In the first resin powder A1, the contents of the CNF and the MAPP were each 10.0 mass%.

### (Production example 1-2: production of first resin powder A2)

First resin powder A2 containing homo PP and CNF was obtained in the same manner as in Production example 1-1 except that pellets of homo PP, CNF, and MAPP were melt-kneaded such that a content of CNF was 5.0 mass% and a content of MAPP was 10.0 mass% in the obtained resin powder.

### (Production example 1-3: production of first resin powder A3)

First resin powder A3 containing homo PP and CNF was obtained in the same manner as in Production example 1-1 except that pellets of homo PP, CNF, and MAPP were melt-kneaded such that a content of CNF was 15.0 mass% and a content of MAPP was 17.5 mass% in the obtained resin powder.

### (Production example 1-4: production of first resin powder A4)

First resin powder A4 containing homo PP and CNF was obtained in the same manner as in Production example 1-1 except that talc (MS-P manufactured by NIPPON TALC Co., Ltd.) in addition to pellets of homo PP, CNF, and MAPP was further added and the obtained product was melt-kneaded. In the first resin powder A4, a content of CNF was 10 mass%, a content of MAPP was 6.5 mass%, and a content of talc was 10.0 mass%.

### (Production example 1-5: production of first resin powder A5)

First resin powder A5 containing homo PP and CNF was obtained in the same manner as in Production example 1-1 except that pellets of homo PP, CNF, and MAPP were melt-kneaded such that a content of CNF and a content of MAPP were each 5.0 mass% in the obtained resin powder.

### (Production example 2-1: production of second resin powder B1)

Second resin powder B1 containing block PP was obtained by freeze-pulverizing pellets of block PP (manufactured by Prime Polymer Co., Ltd., Prime Polypro, J707G, melting point of 165°C, recrystallization temperature of 126°C, MFR of 30 g/10 min., the other monomer was ethylene), and thereafter performing a classification process for removing coarse powder.

### (Production example 2-2: production of second resin powder B2)

Pellets of block PP (manufactured by Prime Polymer Co., Ltd., Prime Polypro, J707G), and CNF (manufactured by Nippon Paper Industries Co., Ltd.) were melt-kneaded by a melt-extruder. The CNF had a fiber diameter ranging from a dozen or so nm to dozens of µm, an average fiber length ranging from dozens of nm to hundreds of µm, and an average fiber diameter of less than 1000 nm, and a part of the CNF was subjected to acetylation modification (modified part). Subsequently, a kneaded product was discharged from the extruder, and a flake-shaped resin molded body was obtained. Subsequently, the obtained resin molded body was freeze-pulverized, a classification process for removing coarse powder was then performed, and second resin powder B2 containing block PP was obtained. A content of CNF in the second resin powder B2 was 5.0 mass%.

### (Production example 2-3: production of second resin powder B3)

Pellets of homo PP (manufactured by Japan Polypropylene Corporation, NOVATEC PP, MA04A) and CNF produced based on the production method disclosed in JP5496435B were melt-kneaded by a melt-extruder. The CNF had a fiber diameter ranging from a dozen or so nm to dozens of µm, an average fiber length ranging from dozens of nm to hundreds of µm, and an average fiber diameter of less than 1000 nm. A part of the CNF was hydrophobized (ASA modification) by hexadecenyl succinic anhydride (T-NS135 manufactured by SEIKO PMC CORPORATION) as a kind of alkenyl succinic anhydride (ASA) (modified part). Subsequently, the kneaded product was discharged from the extruder, and a flake-shaped resin molded body was obtained. Subsequently, the obtained resin molded body was freeze-pulverized, a classification process for removing coarse powder was then performed, and resin powder P was obtained. In the obtained resin powder P, a content of homo PP was 50.0 mass%, and a content of CNF was 31.0 mass%. Subsequently, the obtained resin powder P was diluted with resin powder R2 of block PP produced in Production example 5-2, and second resin powder B3 containing block PP was obtained. In the second resin powder B3, a content of block PP was 83.8 mass%, a content of homo PP was 8.1 mass%, and a content of CNF was 5.0 mass%.

Compositions of the first resin powders and the second resin powders produced in Production examples 1-1 to 1-5 and Production examples 2-1 to 2-3 are collectively indicated below in Table 1.

**[Table 1]**

| | Resin powder | Composition (unit is mass%) |
|---|---|---|
| Production example 1-1 | A1 | homo PP/CNF/MAPP/modified part=77.4/10.0/10.0/2.6 |
| Production example 1-2 | A2 | homo PP/CNF/MAPP/modified part=83.7/5.0/10.0/1.3 |
| Production example 1-3 | A3 | homo PP/CNF/MAPP/modified part=63.6/15.0/17.5/3.9 |
| Production example 1-4 | A4 | homo PP/CNF/MAPP/talc/modified part =70.9/10.0/6.5/10.0/2.6 |
| Production example 1-5 | A5 | homo PP/CNF/MAPP/modified part=88.7/5.0/5.0/1.3 |
| Production example 2-1 | B1 | block PP=100 |
| Production example 2-2 | B2 | block PP/CNF/modified part=93.7/5.0/1.3 |
| Production example 2-3 | B3 | block PP/CNF/modified part/homo PP=83.8/5.0/3.1/8.1 |

### (Production examples 3-1 to 3-9: production of powder materials C1 to C9)

The first resin powders and the second resin powders produced in Production examples 1-1 to 1-5 and Production examples 2-1 to 2-3 were mixed at blending ratios indicated below in Table 2, and powder materials C1 to C9 were obtained.

**[Table 2]**

| | | Powder material | First resin powder | | Second resin powder | |
|---|---|---|---|---|---|---|
| | | Kind | Kind | Blending ratio | Kind | Blending ratio |
| | 3-1 | C1 | A1 | 1 | B1 | 0.67 |
| | 3-2 | C2 | A2 | 1 | B2 | 1.00 |
| | 3-3 | C3 | A1 | 1 | B1 | 1.47 |
| | 3-4 | C4 | A3 | 1 | B1 | 1.47 |
| Production example | 3-5 | C5 | A1 | 1 | B1 | 2.13 |
| | 3-6 | C6 | A3 | 1 | B1 | 2.13 |
| | 3-7 | C7 | A4 | 1 | B1 | 2.13 |
| | 3-8 | C8 | A1 | 1 | B1 | 4.00 |
| | 3-9 | C9 | A5 | 1 | B3 | 0.67 |

Compositions of the powder materials C1 to C9 are indicated below in Table 3.

**[Table 3]**

| Powder material | Composition (unit is mass%) |
|---|---|
| C1 | homo PP/CNF/MAPP/modified part/block PP=46.3/6.0/6.0/1.6/40.1 |
| C2 | homo PP/CNF/MAPP/modified part/block PP=41.8/6.0/6.0/2.2/46.0 |
| C3 | homo PP/CNF/MAPP/modified part/block PP=31.4/4.0/4.0/1.1/59.5 |
| C4 | homo PP/CNF/MAPP/modified part/block PP=25.7/6.1/7.1/1.6/59.5 |
| C5 | homo PP/CNF/MAPP/modified part/block PP=24.7/3.2/3.2/0.8/68.1 |
| C6 | homo PP/CNF/MAPP/modified part/block PP=20.3/4.8/5.6/1.2/68.1 |
| C7 | homo PP/CNF/MAPP/modified part/talc/block PP =22.6/3.2/2.1/3.2/0.8/68.1 |
| C8 | homo PP/CNF/MAPP/modified part/block PP=15.5/2.0/2.0/0.5/80.0 |
| C9 | homo PP/CNF/MAPP/modified part/block PP=56.4/5.0/3.0/2.0/33.6 |

### (Production example 4-1: production of powder material D1)

The resin powder P produced in Production example 2-3 was diluted with the resin powder R2 of block PP produced in Production example 5-2 such that a content of CNF was 10.0 mass%, and thereafter, the obtained product was melt-kneaded by a melt-extruder. Subsequently, the kneaded product was discharged from the extruder, and a flake-shaped resin molded body was obtained. Subsequently, the obtained resin molded body was freeze-pulverized, a classification process for removing coarse powder was then performed, and a powder material D1 formed of one kind of resin powder was obtained. The composition of the powder material D1 satisfied homo PP/CNF/modified part/block PP=16.2 mass%/10.0 mass%/6.0 mass%/67.8 mass%.

### (Production example 4-2: production of powder material D2)

Resin powder Q was obtained in the same manner as in Production example 1-1 except that pellets of homo PP, CNF, and MAPP were melt-kneaded such that a content of CNF and a content of MAPP were each 30.0 mass% in the obtained resin powder. Subsequently, the resin powder Q was diluted with resin powder R1 of homo PP produced in Production example 5-1 such that a content of CNF was 5 mass%, and the obtained product was thereafter melt-kneaded by a melt-extruder. Subsequently, the kneaded product was discharged from the extruder, and a flake-shaped resin molded body was obtained. Subsequently, the obtained resin molded body was freeze-pulverized, a classification process for removing coarse powder was then performed, and a powder material D2 formed of one kind of resin powder was obtained. The composition of the powder material D2 satisfied homo PP/CNF/MAPP/modified part=88.7 mass%/5.0 mass%/5.0 mass%/1.3 mass%.

### (Production example 4-3: production of powder material D3)

A powder material D3 formed of one kind of resin powder was obtained in the same manner as in Production example 4-2 except that the resin powder P produced in Production example 2-3 was used instead of the resin powder Q. The composition of the powder material D3 satisfied homo PP/CNF/modified part=91.9 mass%/5.0 mass%/3.1 mass%.

### (Production example 5-1: production of powder material R1)

Pellets of homo PP (manufactured by Japan Polypropylene Corporation, NOVATEC PP, MA04A) were melt-kneaded by a melt-extruder. Subsequently, the kneaded product was discharged from the extruder, and a flake-shaped resin molded body was obtained. Subsequently, the obtained resin molded body was freeze-pulverized, a classification process for removing coarse powder was then performed, and a powder material R1 formed of resin powder of homo PP was obtained.

### (Production example 5-2: production of powder material R2)

Pellets of block PP (manufactured by Prime Polymer Co., Ltd., Prime Polypro, J707G) were melt-kneaded by a melt-extruder. Subsequently, the kneaded product was discharged from the extruder, and a flake-shaped resin molded body was obtained. Subsequently, the obtained resin molded body was freeze-pulverized, a classification process for removing coarse powder was then performed, and a powder material R2 formed of resin powder of block PP was obtained.

### (Examples 1 to 12, Comparative examples 1 to 3, Reference examples 1, 2)

Each of the powder materials produced as described above was subjected to three-dimensional shaping by a laser sintering 3D printer, and a test piece having a rectangular parallelepiped (width of 10 mm×length of 80 mm×thickness of 4 mm) was produced. The condition for the three-dimensional shaping was as follows.
Kind of laser: CO₂ laser
Laser wavelength: 10.6 µm
Laser output: 30 W or 40 W
Laser sweeping speed: 5 m/second
Laminate thickness (thickness of bond layer): 100 µm, 120 µm, or 150 µm

The mechanical characteristics (Charpy impact strength, flexural modulus, and flexural strength) of the produced test piece were evaluated as follows.

### [Charpy impact strength]

The Charpy impact strength of the test piece was evaluated as Charpy unnotched impact strength by edgewise impact in accordance with the standards of JIS K7111-1:2012. CHARPACK45C manufactured by YONEKURA MFG. Co., Ltd. was used as a testing machine. A span between supports was 62 mm, an impact speed was 2.88 m/second, and nominal pendulum energy was 3.99 J. The measurement temperature was 25°C, and the measurement humidity was 50%RH. Ten test pieces were evaluated, and the average value thereof was set as Charpy impact strength of the test piece.

### [Flexural modulus and flexural strength]

Flexural modulus and flexural strength were evaluated in accordance with the A method defined in JIS K7171:2016. TENSILON UCT-30T manufactured by ORIENTEC CORPORATION was used as a testing machine. A span between supports was 64 mm, and a test speed was 2 mm/min. The measurement temperature was 25°C, and the measurement humidity was 50%RH. Five test pieces were evaluated. The average values thereof were set as flexural modulus and flexural strength of the test piece. A load was applied in a direction corresponding to a direction in which laser was applied during three-dimensional shaping of the test piece.

### [Specific gravity]

Specific gravity was calculated from a volume and a mass of the produced test piece.

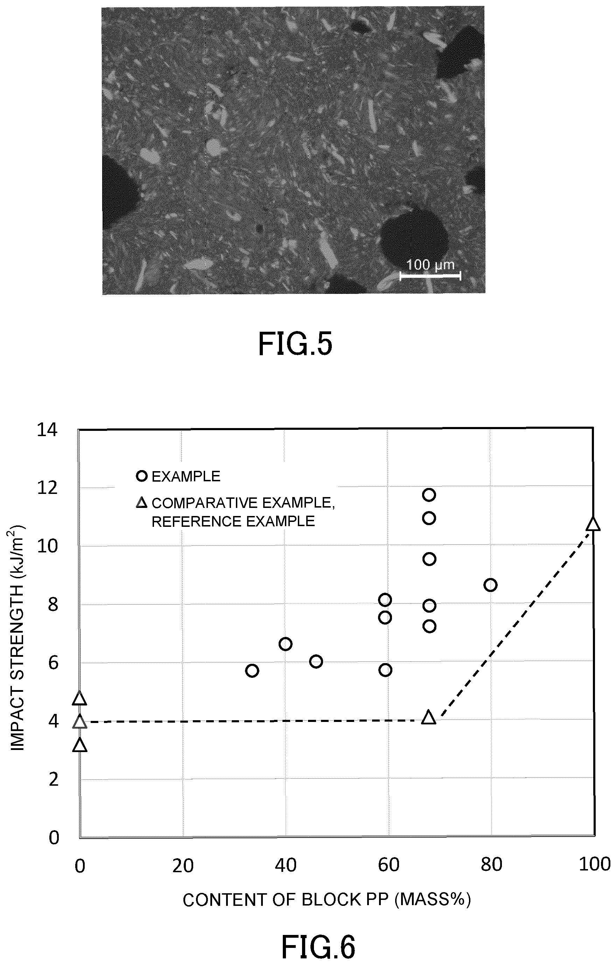

The used powder materials, conditions of the three-dimensional shaping, and results of characteristic evaluation for the examples and the comparative examples are indicated below in Table 4. FIG. 4 and FIG. 5 illustrate the observed magnified images of cross-sections obtained by a fluorescence microscope for the three-dimensional shaped articles produced in Example 3 and Comparative example 1, respectively. The images illustrated in FIG. 4 and FIG. 5 are observed magnified images in a state where excitation light having a wavelength at which CNF emits fluorescence was applied to the cross-section. A phase including CNF was indicated more brightly than a phase including no CNF. FIG. 6 shows relationship between a content of the block PP in the used powder material and Charpy impact strength for the examples, the comparative examples, and the reference examples.

**[Table 4]**

| | Powder material | Shaping condition | | Characteristics | | | |
|---|---|---|---|---|---|---|---|
| | | Laser output (W) | Laminate thickness (µm) | Impact strength (kJ/m²) | Flexural modulus (GPa) | Flexural strength (MPa) | Specific gravity (g/cm³) |
| Example 1 | C1 | 30 | 100 | 6.6 | 1.66 | 26.0 | 0.83 |
| Example 2 | C2 | 30 | 100 | 6.0 | 1.56 | 24.8 | 0.81 |
| Example 3 | C3 | 40 | 150 | 7.5 | 1.34 | 22.3 | 0.78 |
| Example 4 | C3 | 30 | 100 | 8.1 | 1.58 | 23.7 | 0.83 |
| Example 5 | C4 | 30 | 100 | 5.7 | 1.24 | 21.6 | 0.77 |
| Example 6 | C5 | 40 | 120 | 9.5 | 1.65 | 24.5 | 0.79 |
| Example 7 | C5 | 30 | 100 | 10.9 | 1.62 | 28.4 | 0.78 |
| Example 8 | C5 | 40 | 100 | 11.7 | 1.72 | 29.1 | 0.76 |
| Example 9 | C6 | 30 | 100 | 7.9 | 1.36 | 21.8 | 0.85 |
| Example 10 | C7 | 30 | 100 | 7.2 | 1.41 | 21.2 | 0.86 |
| Example 11 | C8 | 30 | 100 | 8.6 | 1.20 | 18.9 | 0.80 |
| Example 12 | C9 | 30 | 100 | 5.7 | 1.88 | 30.0 | 0.85 |
| Comparative example 1 | D1 | 30 | 100 | 4.1 | 1.23 | 18.6 | 0.78 |
| Comparative example 2 | D2 | 30 | 100 | 4.8 | 1.99 | 28.4 | 0.82 |
| Comparative example 3 | D3 | 30 | 100 | 3.2 | 2.24 | 30.9 | 0.81 |
| Reference example 1 | R1 | 30 | 100 | 4.0 | 1.91 | 30.8 | 0.77 |
| Reference example 2 | R2 | 30 | 100 | 10.7 | 1.13 | 20.7 | 0.77 |

As indicated in Table 1, the three-dimensional shaped articles of the examples exhibited Charpy impact strength which was not able to be achieved in a case where the powder material formed of resin powder of homo PP was used (Reference example 1) while exhibiting high flexural properties, in particular, high flexural modulus. The cross-section of the three-dimensional shaped article of Example 3 as illustrated in FIG. 4 had a sea-island structure having an island portion formed by the first domain containing homo PP and CNF, and a sea portion formed by the second domain containing block PP. Meanwhile, as illustrated in FIG. 5, the three-dimensional shaped article of Comparative example 1 which was formed by using the powder material that included homo PP, block PP, and CNF but was formed of one kind of resin powder merely had one phase. Portions indicated darkly in the observed magnified image in FIG. 5 were voids.

### INDUSTRIAL APPLICABILITY

The powder material for three-dimensional shaping according to the present invention can be used for the same application as conventional powder materials for three-dimensional shaping.

## Claims

1. A powder material for three-dimensional shaping, the powder material comprising:
first resin powder containing homo polypropylene and nanofiber; and
second resin powder containing block polypropylene.

2. The powder material for three-dimensional shaping according to claim 1, wherein a blending ratio of the second resin powder to the first resin powder as represented by a mass of the second resin powder when a mass of the first resin powder is taken as 1, is 0.6 or more and 4.0 or less.

3. The powder material for three-dimensional shaping according to claim 1, wherein a blending ratio of the second resin powder to the first resin powder as represented by a mass of the second resin powder when a mass of the first resin powder is taken as 1, is 1.4 or more and 3.0 or less.

4. The powder material for three-dimensional shaping according to claim 1, wherein a content of the nanofiber in the first resin powder is 15 mass% or less.

5. The powder material for three-dimensional shaping according to claim 1, wherein the nanofiber is cellulose nanofiber.

6. The powder material for three-dimensional shaping according to claim 1, wherein the block polypropylene includes a copolymer of propylene and an olefin, and propylene is excluded from the olefin.

7. A method for manufacturing a three-dimensional shaped article, the method comprising obtaining a three-dimensional shaped article by three-dimensional molding of the powder material for three-dimensional shaping according to any one of claims 1 to 6, by a laser sintering 3D printer.

8. A three-dimensional shaped article comprising polypropylene,
the three-dimensional shaped article comprising a first domain containing homo polypropylene and nanofiber, and a second domain containing block polypropylene.

9. The three-dimensional shaped article according to claim 8, wherein the three-dimensional shaped article has a cross-section on which a sea-island structure having an island portion formed by the first domain and a sea portion formed by the second domain is observed.

10. The three-dimensional shaped article according to claim 8, wherein
Charpy unnotched impact strength by edgewise impact as evaluated in accordance with standards of JIS K7111-1:2012 is 5.5 kJ/m² or more, and
a flexural modulus evaluated in accordance with an A method defined in JIS K7171:2016 is 1.2 GPa or more.

11. The three-dimensional shaped article according to claim 10, wherein flexural strength evaluated in accordance with the A method defined in JIS K7171:2016 is 21 MPa or more.
